# EUROPEAN PATENT APPLICATION

(11) **EP 1 801 346 A1**
(43) Date of publication of application: **27.06.2007**
(21) Application number: 06398021.3
(22) Date of filing: 21.12.2006
(51) Int. Cl.: E21B 41/00, E21B 43/00, E21B 43/16

(54) **Process for carbon dioxide sequestration by injection in coal seams**

(30) Priority: 21.12.2005 PT 10340605
(71) Applicant: Instituto Superior Técnico, 1049-001 Lisboa (PT); Faculdade de Ciências da Universidade do Porto, 4099-002 Porto (PT)
(72) Inventor: Lemos Sousa, Manuel João, Praça Gomes Teixeira 4099-002 Porto (PT); Alves Rodrigues, Cristina Fernanda, Praça Gomes Teixeira 4099-002 Porto (PT); Moraz Miranda, António, 1049-001 Lisboa (PT)
(74) Representative: Pereira da Cruz, Joao

(57) **Abstract**

The invention corresponds to geologic and mining engineering domain and consists of a process for gaseous phase carbon dioxide geological sequestration, and natural gas production.

With the present process (acronym SEQCO) it is possible:
- to directly inject gaseous phase CO2 and other gases in coal seams, therefore contributing to reduce the greenhouse effect in the atmosphere, and
- depending of the needs, to simultaneously produce energy natural gases.

## Description

### Field of invention

The present invention generally relates to the fields of Geology, Engineering, Energy and Environment, particularly in the scope of greenhouse gas abatement and the production of non-conventional hydrocarbons enhanced production (namely Coalbed methane).

### Backgroung of the Invention

Studies worldwide of "Climate change" demonstrate the unquestionable need for the abatement of greenhouse gases. CO₂, a major component of greenhouse gases (GHG), besides natural origin, is produced from human activities principally during the generation of electricity in thermal power plants and in other major industrial activities such as oil refineries, cement and ceramic plants and iron and steel works. Apart from transports, these sources account dramatically for CO₂ emissions, and the above referred industrial activities are likely to continue in the medium and in the long term.

Although there is research on the substitution of coal by renewable energy sources, there are many obstacles which hinder the rapid growth of these technologies. Furthermore, the drive for the development of near zero emission fossil fuel based energy conversion systems includes, as a component technology, the separation, capture and storage of CO₂. However, in the transition to a future new energy supply infrastructure based on carbon-free systems, we will continue to produce enormous amounts of CO₂.

Additionally, it is demonstrated that improving the efficiency of thermal power plants and switching from coal to natural gas does not resolve, *per se,* the required CO₂ reduction. Moreover, CO₂ capture and sequestration is applicable to industrial emissions only and not to other human activities such as transport, agriculture and household routines.

As for power generation we will remain quite dependent on coal, oil and natural gas in the next decades, we have to find better ways of reducing CO₂ emissions in accordance and to conform to Kyoto Protocol.

Another very actual and important problem is the need for search of new sources of energy, even in the domain of fossil fuels. This is the case of the actual and worldwide important development of Coalbed methane prospecting and exploring.

Therefore, the present research has been developed as to simultaneously promote the abatement of greenhouse gases in the atmosphere (namely Carbon Dioxide) by direct geologic sequestration directly in coal seams, and the industrial production/exploitation of energetic gases (namely the ones part of Coalbed methane) generated and stored in the same coal seams.

The process herewith presented have the acronym designation of **SEQCO** and was patented under Portuguese Patent ref 103 406 which is apparently somewhat similar to the method described in the French Patent ref. FR 2 870 752-A1. However, important differences exist between the two methods as shown in Table 1, therefore demonstrating that, in the practice, we are dealing with two quite different projects.

French Application FR 2 870 752-A1 concerns to gases in liquid phase, and therefore the text refers to a process of draining of liquids and it is intended to only allow to reduce (by geologic sequestration) acid greenhouse gases in the atmosphere (namely CO₂). The geologic sequestration refers to any reservoir (petroleum reservoirs, aquiferous, and coal mines). Said patente application does not foresee directional drilling for specific purposes. The system to avoid fluid escape and the surface monitoring procedures are specifically adapted to the injection of fluids under liquid phase.

### Description of invention

### (a) Objectives, advantages and innovation

The objectives of thr present invention are the reduction of greenhouse gases (namely Carbon dioxide) in the atmosphere and production of energy gases (namely Coalbed methane, Coalseam methane and Coalmine methane).

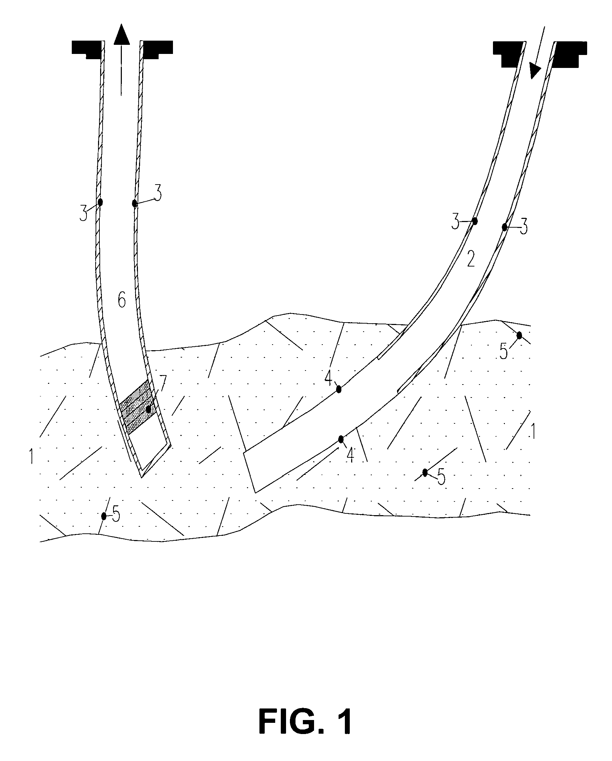

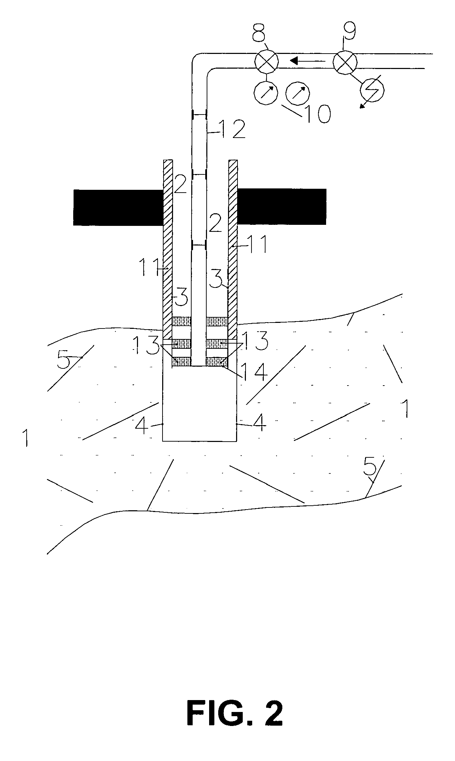

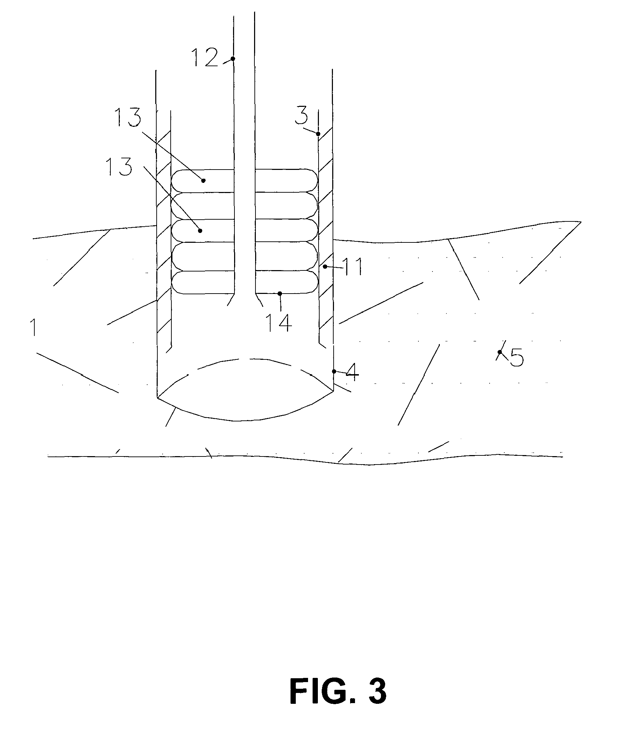

The present process, which acronym is SEQCO, permits to place CO₂ (and other gases), in gaseous phase, in direct contact with coal seams in which they will be diffused and subsequently stored by adsorption. Depending of the needs, the process also allows the production/exploitation of natural energetic gases formed and stored in the same seams (fig.1.1), as well as, the water in coal porosity (bed moisture).

### (b) Detailed description

### 1. SEQCO - CO₂ Sequestration

The process entitled SEQCO allows to inject and diffuse CO₂ (Carbon dioxide) and other gases, under gaseous phase, in coal seams (fig. 1.1) in which the gases will be permanently stored by adsorption. The process also allows to produce from the same seams (fig.1.1) energetic natural gas. In both cases, the process is conducted through directional drilled boreholes.

The boreholes (fig.1.2) will be continuously cased (fig.1.3) except in the zones for gas injection and will be drilled as to maximize the contact surface (specific free surface) between the CO₂ and the coal (fig.1.4) taking into account the coal cleat orientation and connectivity (fig.1.5).

Boreholes drilled for CO₂ gaseous phase geological sequestration in coal seams (fig.1.2), as well as, those boreholes drilled for energetic gas production (fig.1.6) will constitute a network delineated talking into account the local geological characteristics and the underground geometry/setting of coal seams.

Boreholes for natural energetic gas production (fig.1.6) could be directionally drilled either perpendicular or (in the cases in which previous prospecting/exploring works recommend) horizontally to the seam plan orientation.

Boreholes for gas production (fig.1.6) are also continuously cased, and will also have drains (fig.1.7) and filters placed in the zone of coal seam. These boreholes will also be provided with appropriate devices for gas flow measurement and gas sampling.

## Claims

1. Process for gaseous phase CO₂ (carbon dioxide) sequestration by direct injection in coal seams, eherein CO2 is diffused in the coal seam inducing the release of energy gases and water present in the coalbed by using valves, pump equipment and instrumental monitoring at the surface.

2. Process of gaseous phase CO₂ sequestration by adsorption in coal seams, in accordance with Claim 1, and which specifications are as follows:
a) drilling boreholes to reach coal seams by utilizing the technology of directional drilling in order to maximize the surface of contact for CO₂ diffusion/adsorption taking into account the coal cleat orientation and connectivity;
b) boreholes will be subjected to continuous casing except in the injection sections;
c) inside the already cased boreholes and until the injection sections, it will be introduced threaded pipes containing at the very end (i.e. at the injection point) anti-escape joint systems controlled from the surface.

3. Process of gaseous phase CO₂ sequestration in coal seams, in accordance with the above referred claims, **characterized by** the use of a series of similar boreholes drilled at intervals determined by calculation, depending of local geological setting and of the underground geometry of coal seams and byt he borehole network is monitored by remote control including the registration of measurements obtained from sensors installed in each borehole (for temperature, pressure, strain, and water and gas flows and sampling).

4. Process of gaseous phase CO₂ sequestration in coal seams, in accordance with the above referred claims, **characterized by** on-line connection of the whole monitoring system with a central unit for data register and processing.

5. Process of gaseous phase CO₂ sequestration **characterized by** the possibility of simultaneously induce the release of natural energetic gases generated and stored in coal seams, therefore permitting, at the same time, the reduction of greenhouse gases in the atmosphere and the industrial production of natural energetic gases.
